Europäisches Patentamt

(19) European Patent Office

Office européen des brevets

(11) Numéro de publication : **0 210 093 B1**

(12) **FASCICULE DE BREVET EUROPEEN**

(45) Date de publication du fascicule du brevet :
24.07.91 Bulletin 91/30

(51) Int. Cl.⁵ : **H02H 7/26, H02J 13/00**

(21) Numéro de dépôt : 86401365.1

(22) Date de dépôt : 23.06.86

(54) **Procédé et dispositif de contrôle de la transmission de signaux de protection différentielle.**

(30) Priorité : 25.06.85 FR 8509628

(43) Date de publication de la demande :
28.01.87 Bulletin 87/05

(45) Mention de la délivrance du brevet :
24.07.91 Bulletin 91/30

(84) Etats contractants désignés :
CH DE GB IT LI SE

(56) Documents cités :
US-A- 3 947 636
US-A- 4 203 072

(56) Documents cités :
IEEE TRANSACTIONS ON POWER APPARA-
TUS AND SYSTEMS, vol. PAS-97, no. 6,
novembre/décembre 1978, pages 2272-2280,
IEEE, New York, US; M. KITAGAWA et al.:
"Newly developed FM current-differential
carrier relaying system and its field experiences"

(73) Titulaire : SCHLUMBERGER INDUSTRIES
50, avenue Jean Jaurès
F-92120 Montrouge (FR)

(72) Inventeur : Arbes, Jean
5, rue Henri Thirard
F-94 240 L'Hay Les Roses (FR)

(74) Mandataire : Weinmiller, Jürgen et al
Lennéstrasse 9 Postfach 24
W-8133 Feldafing (DE)

## Description

La présente invention concerne un procédé et un dispositif pour le contrôle d'un signal transmis d'un émetteur à un récepteur dans un système de protection différentielle d'un ouvrage électrique, ce signal transmis prenant la forme d'un signal modulé résultant d'une modulation de fréquence ou de période d'une onde porteuse au moyen d'un signal représentant l'information pertinente à transmettre, procédé et dispositif dans lesquels on détecte la présence de bruits de transmission dans le signal reçu, dans le but de distinguer ces bruits des informations, dont ce signal peut être porteur, relatives à un éventuel défaut de l'ouvrage protégé.

Il est connu depuis longtemps de surveiller le bon fonctionnement de certains ouvrages électriques, des lignes à haute tension par exemple, en comparant les unes aux autres les informations de courant et de tension relatives aux deux extrémités de cet ouvrage.

Ces techniques de protection, dites "différentielles", exigent évidemment le transport des informations relatives à chacune des extrémités de la ligne en direction de l'autre extrémité, en vue de leur comparaison avec les informations relatives à cette autre extrémité.

Les systèmes de protection différentielle de lignes à haute tension utilisent généralement des voies téléphoniques pour ces échanges d'informations.

Cependant, la bande passante de la voie téléphonique (300-3400 Hz) ne couvre pas la fréquence fondamentale du signal à transmettre (50-60 Hz), de sorte qu'il est nécessaire d'avoir recours à une technique de modulation pour transmettre ce signal.

Les procédés de modulation les plus utilisés sont la modulation en fréquence et la modulation de période.

Les supports de communication les plus fréquemment utilisés par les voies téléphoniques sont les câbles coaxiaux et les faisceaux hertziens.

Les signaux modulés utilisant ces supports et ces modes de communication peuvent être soumis à des perturbations, qui se traduisent en particulier par des bruits impulsionnels unidirectionnels et des sauts de phase affectant les signaux transmis.

Ces bruits, qui se retrouvent dans les signaux reçus et démodulés peuvent être interprétés comme des défauts de l'ouvrage électrique protégé et conduire à des déclenchements intempestifs des systèmes de protection.

Il est donc important de détecter sélectivement la présence de bruits de transmission.

Deux techniques de détection sont actuellement utilisées.

La première repose sur le contrôle de la variation de la durée de la demi-période du signal modulé reçu. Si $T_N$ est la durée de la demi-période d'ordre N de ce signal et $T_{N+1}$ la durée de la demi-période d'ordre N+1, cette technique repose sur la surveillance du rapport $R=(T_N-T_{N+1})/T_{N+1}$ ; en effet, en l'absence de bruits de transmission affectant les instants de passage à zéro du signal modulé reçu, donc la durée d'au moins une demi-période, la valeur absolue du rapport R reste inférieure à une valeur limite calculable, correspondant physiquement au fait que la modulation est un phénomène progressif, à l'image du signal modulant dont la dérivée en fonction du temps reste inférieure à une valeur modérée.

Cette première approche, qui exige la mise en oeuvre d'un procédé de chronométrie assez précis et le calcul de la valeur absolue du rapport R, est assez coûteuse en moyens techniques.

D'autre part, elle se montre assez peu sensible pour la détection de bruits de transmission correspondant à des sauts de phase de courte durée.

La seconde technique de détection connue consiste à contrôler le spectre de fréquence du signal reçu et démodulé. En effet, après une démodulation complète, le signal reçu ne contient plus que le signal modulant porteur de l'information à transmettre, auquel se superposent les éventuels bruits de transmission. Selon cette seconde technique de détection, on effectue donc sur le signal reçu démodulé un filtrage coupe-bande éliminant le signal modulant (50 Hz ou 60 Hz) et l'on surveille le niveau du bruit résiduel. Un niveau trop élevé correspond à un taux inacceptable de bruits de transmission.

Cette second méthode, qui exige la réalisation d'un filtre coupe-bande étroit, précis, et d'atténuation très forte, se heurte, pour un résultat final satisfaisant, à d'importantes difficultés de réalisation.

Dans ce contexte, la présente invention a pour but de proposer un procédé et un dispositif de détection de bruits de transmission qui soient fiables et de mise en oeuvre aisée.

Le procédé de l'invention est essentiellement caratérisé en ce qu'il comprend une opération consistant essentiellement à détecter, dans le spectre de fréquences du signal modulé reçu, l'apparition de composantes dont la fréquence est inférieure à la fréquence minimale du signal modulé émis, l'apparition de telles fréquences étant attribuée à la présence de bruits de transmission.

Cette opération de détection est de préférence précédée par une opération de mise en forme du signal modulé reçu, conduisant à limiter les variations d'amplitude de ce signal à des transitions rapides entre deux niveaux équidistants de zéro.

2

La détection consiste en un filtrage passe-bande ou passe-bas du signal modulé reçu, rejetant les fréquences supérieures à une fréquence haute elle même choisie de préférence inférieure à la moitié de la fréquence minimale du signal modulé émis.

Le dispositif de l'invention comprend un filtre passe-bande ou passe-bas recevant le signal modulé reçu, de préférence après le traitement de ce signal dans un circuit de mise en forme qui délivre un signal modulé ne présentant plus que deux niveaux d'amplitude et des transitions franches.

Le filtre utilisé est de préférence un filtre de Butterworth dont la sortie est reliée à l'une des deux entrées d'au moins un comparateur ; ce comparateur, qui reçoit un signal de référence sur son autre entrée, délivre un signal indicateur de bruit de transmission lorsque l'amplitude du signal de sortie du filtre est, en valeur absolue, supérieure à celle du signal de référence.

Un mode particulier de réalisation de l'invention sera décrit ci-après, à titre indicatif et nullement limitatif, en référence aux dessins annexés, parmi lesquels :
– La figure 1 est un schéma général d'un système de protection différentielle pour une ligne à haute tension;
– La figure 2 est un schéma d'un système de transmission d'informations, pour une telle protection différentielle, dont le récepteur utilise le principe de l'invention ;
– Les figures 3a et 3b représentent, respectivement avant et après mise en forme, un signal modulé reçu affecté par des bruits de transmission ;
– La figure 4 représente le spectre de fréquences d'un signal modulé reçu (après mise en forme), exempt de bruits de transmission.

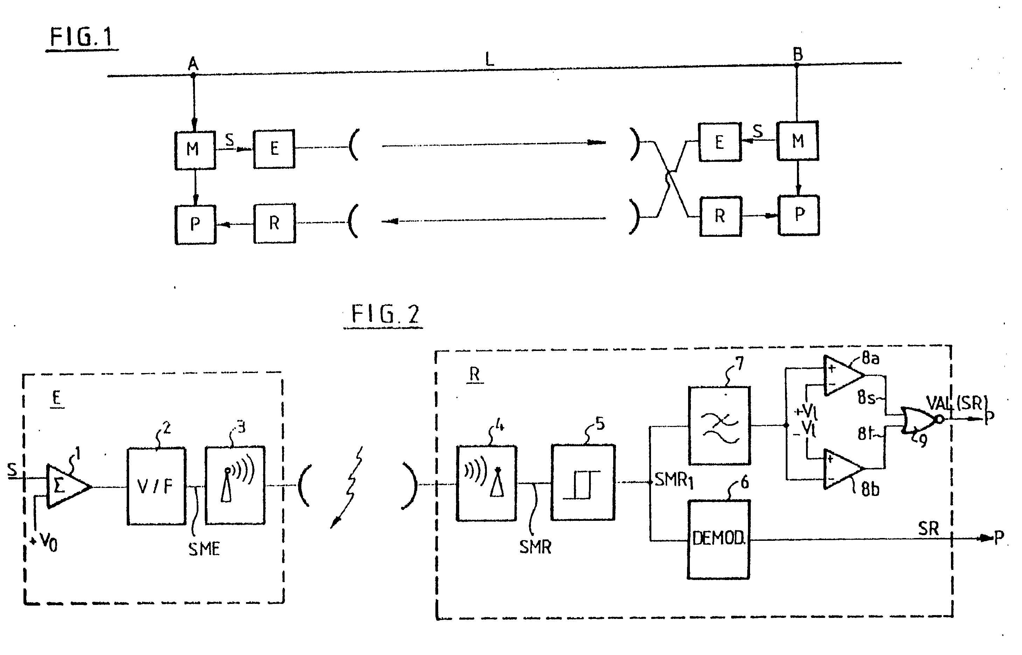

La présente invention concerne de façon générale la transmission d'informations dans des systèmes de protection différentielle tels que celui qui est illustré sur la figure 1.

Cette figure représente une ligne à haute tension L dont la protection est assurée entre les points A et B.

En chacun de ces points A et B sont disposés des transformateurs de mesure, génériquement désignés par M, un circuit de protection P, un émetteur E et d'un récepteur R.

Les transformateurs de mesure M, au point A par exemple, ont pour fonction de produire des signaux représentatifs des tensions et courants de la ligne L au point A ou toutes autres informations pertinentes pour la protection de cette ligne.

Ces informations sont d'une part transmises directement au circuit de protection du point A, d'autre part transmises au circuit de protection P du point B par l'intermédiaire d'un émetteur E situé au point A et d'un récepteur situé au point B.

La configuration étant totalement symétrique pour les points A et B, les circuits de protection P situés à chacune des extrêmités reçoivent les informations pertinentes relatives à l'extrêmité de ligne où ils sont implantés et les informations relatives à l'autre extrémité de la ligne.

Ces circuits de protection P peuvent alors, en comparant les informations qu'ils reçoivent de chacune des extrémités de la ligne L, détecter les éventuels défauts affectant cette ligne.

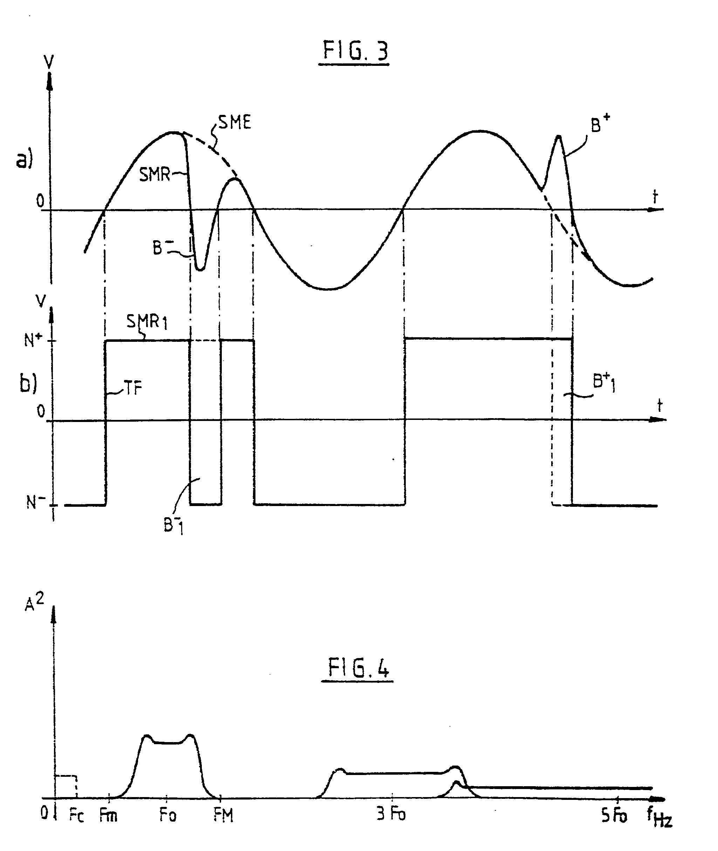

Cependant, comme le montre symboliquement la figure 2 par un éclair, il est possible que les informations en provenance de l'extrémité de ligne qui est la plus éloignée d'un circuit de protection P soient perturbées par des bruits affectant la transmission de ces informations de l'émetteur E au récepteur R. Il existe alors le risque que ces bruits soient interprétés par ce circuit de protection P comme un défaut sur la ligne L.

Dans ce contexte, l'invention vise la détection des bruits de transmission, dans le but d'éviter le fonctionnenent intempestif des circuits de protection P.

L'émetteur E de la figure 2 reçoit un signal S à transmettre, représentant une information pertinente pour la protection, telle que la valeur d'une tension ou d'un courant de ligne, fournie par l'un des transformateurs M.

Ce signal S est, dans un amplificateur sommateur 1, ajouté à une tension de polarisation $V_o$ connue et choisie pour que la sortie de ce sommateur 1 garde un signe constant et puisse ainsi directement commander un convertisseur tension fréquence 2.

Le signal de sortie du convertisseur 2, qui représente le signal modulé émis SME, est délivré à un circuit de transmission 3 gui se charge, par voie hertzienne par exemple, d'envoyer ce signal au circuit de transmission 4 d'un récepteur R. Le signal modulé reçu, disponible à la sortie du circuit 4, est désigné par SMR pour rappeler la possibilité que ce signal diffère du signal modulé émis SME.

La figure 3a représente en fonction du temps t l'amplitude V des signaux modulés émis SME et reçu SMR, dans le cas où des bruits de transmission à contribution négative (B⁻) ou positive (B⁺) ont déformé le signal émis au cours de la transmission. On remarque en particulier que les passages à zéro des signaux SME et SMR sont différents.

Le récepteur comprend un circuit bistable 5 (trigger de Schmitt) recevant le signal modulé reçu SMR et délivrant un signal modulé mis en forme SMR₁ dont les variations d'amplitude se limitent à des transmissions franches TF entre deux niveaux d'amplitude N⁺ et N⁻ équidistants de zéro (figure 3b). Si le signal SMR a une polarité positive, le signal mis en forme $SMR_1$ est au niveau positif $N^+$, et si le signal SMR a une polarité négative, le signal mis en forme $SMR_1$ est au niveau négatif $N^-$.

Le signal modulé reçu et mis en forme $SMR_1$ est délivré à un démodulateur 6 qui produit à sa sortie un signal reconstitué SR.

De tels démodulateurs sont bien connus de l'homme de l'art, de sorte que leur description détaillée est largement superflue. Ils peuvent consister par exemple en un convertisseur fréquence tension délivrant un signal comprenant des composantes continue et alternative et qui, après élimination de sa composante continue, constitue le signal démodulé SR.

En l'absence de bruits de transmission, ce signal reconstitué SR est une image fidèle du signal modulant S à partir duquel le signal modulé SME a été élaboré, et peut donc être utilisé par le circuit de protection P.

En outre, en l'absence de bruits de transmission, le signal mis en forme $SMR_1$ présente un spectre de fréquence du type illustré sur la figure 4.

Sur cette figure, $F_o$ représente la fréquence de l'onde porteuse, c'est-à-dire la fréquence qui est adoptée par le signal modulé SME si le signal modulant S est nul, et qui est due à la conversion en fréquence de la tension de polarisation $V_o$.

De façon classique, le signal S est un signal sinusoïdal, et la fréquence du signal modulé émis SME est de la forme $F_o+K.V(S)$ où K est une constante et où V(S) désigne la valeur instantanée, positive ou négative, du signal S ; il en résulte que la fréquence du signal modulé émis SME évolue entre une fréquence minimale :

$$Fm=F_o-K.|V_{MAX}(S)|$$

et une fréquence maximale :

$$FM=F_o+K.|V_{MAX}(S)|$$

où $|V_{MAX}(S)|$ désigne la valeur absolue de l'amplitude maximale du signal S.

Une telle caractéristique de fréquence se retrouve, sur la figure 4, dans le spectre de fréquence du signal mis en forme $SMR_1$, qui fait apparaître des composantes de fréquence dans une bande Fm-FM centrée sur la fréquence $F_o$ de l'onde porteuse.

Cette figure 4 fait également apparaître des composantes dans des bandes centrées sur les fréquences impaires 3 $F_o$, 5 $F_o$, ces composantes étant cependant dues uniquement à la mise en forme, par le circuit 5, du signal SMR directement reçu.

L'invention repose essentiellement sur la mise en évidence et l'utilisation du fait qu'en présence de bruits impulsifs de transmission, le spectre du signal $SMR_1$ représenté sur la figure 4 présente des composantes de fréquence d'amplitude relativement importantes dans une bande comprise entre zéro et la fréquence minimale $F_m$ du signal modulé émis, alors qu'en l'absence de bruits de transmission ce spectre est exempt de composantes à basse fréquence d'amplitude significative, même si le signal modulé reçu $SMR_1$ est affecté par des irrigularités révélant un défaut de la ligne.

Ainsi, dans le mode de réalisation particulier de la figure 2, les bruits de transmission sont mis en évidence au moyen d'un filtre passe bas ou passe-bande de Butterworth du 5ème ordre, 7, recevant le signal modulé mis en forme $SMR_1$.

En l'absence de bruits, tels que $B^-$ et $B^+$, conduisant à des bruits mis en forme tels que $B_1^-$ et $B_1^+$, le filtre 7 ne délivre aucun signal significatif à sa sortie, sous réserve que la fréquence de coupure supérieure $F_c$ de ce filtre soit inférieure à la fréquence minimale $F_m$.

En présence de bruits $B_1^-$ ou $B_1^+$ de durée significative, le filtre 7 délivre un signal de sortie, susceptible d'être détecté dans des conditions satisfaisantes, et correspondant à la réponse impulsionnelle de ce filtre.

Bien que le filtre 7 puisse recevoir directement le signal modulé reçu SMR, il est très avantageux de faire en sorte que le filtre 7 reçoive le signal modulé mis en forme $SMR_1$.

En effet, l'énergie d'un bruit tel que $B^+$ affectant le passage à zéro du signal SMR est différente, pour une même durée, selon que ce bruit apparaît au voisinage du passage à zéro du signal SMR ou au voisinage de l'amplitude maximale de ce signal. Au contraire, l'énergie d'un bruit tel que $B_1^+$ affectant le signal $SMR_1$ est identique, pour une même durée, quel que soit le moment où ce bruit apparaît. Le circuit bistable de mise en forme 5 remplit donc, lorsqu'il est placé avant le filtre, 7, une fonction de normalisation de l'énergie des bruits de transmission conduisant à une meilleure détection de ces derniers.

En pratique, la fréquence de coupure supérieure $F_c$ de ce filtre est choisie de préférence inférieure à la moitié de la fréquence minimale $F_m$, de façon que le signal résiduel délivré par ce filtre en l'absence de bruit ait un niveau très faible, par exemple inférieur en valeur absolue à un seuil $V_1$.

Dans le cas de l'utilisation d'un filtre passe-bande, la fréquence de coupure inférieure de ce filtre est choisie proche de zéro, par exemple de l'ordre d'une vingtaine de hertz, de manière que la sortie de ce filtre puisse être activée de façon significative par la détection de fréquences distribuées sur une bande de fréquence assez large.

La réponse impulsionnelle du filtre 7, indiquant la présence d'un bruit de transmission, est par exemple détectée en comparant, dans deux comparateurs respectifs 8a et 8b, le signal de sortie du filtre 7 avec le seuil positif $+V_1$ et avec le seuil négatif $-V_1$.

Si le signal de sortie du filtre 7 se met à dépasser le seuil positif $+V_1$, le signal de sortie 8s du comparateur 8a, intialement à l'état logique "0", passe à l'état logique "1".

De même, si le signal de sortie du filtre 7 devient inférieur au seuil négatif $-V_1$, le signal de sortie 8t du comparateur 8b, initialement à l'état logique "0", passe à l'état logique "1".

Ces comparateurs 8a et 8b sont reliés aux entrées d'une porte OU-NON 9 qui délivre un signal VAL(SR) de validation du signal reconstitué SR, ce signal de validation étant à l'état logique "1" en l'absence de bruits de transmission détectés, et à l'état logique "0" en présence de bruits.

Le signal VAL(SR) est, comme le signal SR, transmis au circuit de protection P et commande au circuit P de ne pas prendre en compte le signal SR aux instants où ce dernier est supposé affecté par des bruits de transmission.

Dans un mode de réalisation particulier, donné à simple titre d'exemple, les différents paramètres introduits peuvent prendre les valeurs suivantes :

| | |
|---|---|
| **Fréquence de l'onde porteuse** | : 1900 Hz |
| **Fréquence minimale $F_m$** | : 1000 Hz |
| **Fréquence maximale $F_M$** | : 2800 Hz |
| **Filtre 7 : passe-bas de Butterworth, $5^{ème}$ ordre** | |
| **Fréquence de coupure $F_c$** | : 350 Hz |
| **Seuil de détection $V_1$** | : $16.10^{-3}.N^+$ |
| **Fréquence de S** | : 50 Hz |

Ces caractéristiques permettent la détection de bruits tels que $B_1^+$ ou $B_1^-$ de durée supérieure ou égale à 20 microsecondes.

## Revendications

1. Procédé de contrôle d'un signal transmis d'un émetteur (E) à un récepteur (R) dans un système de protection différentielle d'un ouvrage électrique, ce signal transmis prenant la forme d'un signal modulé (SME) résultant d'une modulation de fréquence ou de période d'une onde porteuse ($F_o$) au moyen d'un signal (S) représentant l'information pertinente à transmettre, ce procédé comprenant une opération de détection propre à révéler la présence de bruits de transmission ($B^-$, $B^+$) dans le signal reçu (SMR), dans le but de distinguer ces bruits des informations, dont ce signal peut être porteur, relatives à un éventuel défaut de l'ouvrage protégé, caractérisé en ce que cette opération consiste essentiellement à détecter, dans le spectre de fréquence du signal modulé reçu (SMR), l'apparition de composantes dont la fréquence est inférieure à la fréquence minimale ($F_m$) du signal modulé émis (SME), l'apparition de telles fréquences étant attribuée à la présence de bruits de transmission ($B^-$, $B^+$).

2. Procédé suivant la revendication 1, caractérisé en ce que ladite opération de détection est précédée par une opération de mise en forme du signal modulé reçu (SMR), conduisant à limiter les variations d'amplitude de ce signal à des transitions rapides (TF) entre deux niveaux ($N^+,N^-$) équidistants de zéro.

3. Procédé suivant l'une quelconque des revendications 1 et 2, caractérisé en ce que l'opération de détection consiste en un filtrage passe-bas du signal modulé reçu, effectué avec une fréquence de coupure ($F_c$)inférieure à la moitié de la fréquence minimale du signal modulé émis.

4. Dispositif pour le contrôle d'un signal transmis d'un émetteur (E) à un récepteur (R) dans un système de protection différentielle d'un ouvrage électrique, ce signal transmis prenant la forme d'un signal modulé (SME) résultant d'une modulation de fréquence ou de période d'une onde porteuse($F_o$) au moyen d'un signal représentant l'information pertinente à transmettre (S), ce dispositif comprenant un détecteur (7, 8, 9) propre à mettre en évidence les bruits de transmission ($B^-$, $B^+$) affectant le signal reçu (SMR), caractérisé en ce que ce détecteur comprend un filtre passe-bas ou passe-bande (7) recevant le signal modulé reçu (SMR) et possédant une fréquence de coupure supérieure ($F_c$) inférieure à la fréquence minimale du signal modulé émis (SME).

5. Dispositif suivant la revendication 4, caractérisé en ce qu'il comprend un circuit de mise en forme (5) recevant directement le signal modulé reçu et fournissant au filtre passe-bas ou passe-bande un signal modulé à deux niveaux et à transitions franches.

6. Dispositif suivant la revendication 4 ou 5, caractérisé en ce que le filtre (7) est un filtre de Butterworth.

7. Dispositif suivant l'une quelconque des revendications 4 à 6, caractérisé en ce qu'il comprend un comparateur (8a) relié à la sortie du filtre, recevant un signal de référence ($V_1$), et fournissant un signal (8s, 8t) indicateur de bruits de transmission lorsque l'amplitude du signal de sortie du filtre (7) est, en valeur absolue, supérieure à celle du signal de référence ($V_1$).

## Patentansprüche

1. Verfahren zur Überwachung eines von einem Sender (E) an einen Empfänger (R) übertragenen Signals in einem Differentialsystem zum Schutz einer elektrischen Anlage, wobei das übertragene Signal die Form eines aus einer Frequenz- oder Periodenmodulation einer Trägerwelle ($F_o$) hervorgegangenen modulierten Signals besitzt und die Trägerwelle mit einem Signal (S) moduliert wird, das die zu übertragende relevante Information darstellt, und wobei das Verfahren eine Erfassungsoperation aufweist, mit der das Vorhandensein von Übertragungsstörsignalen ($B^-$, $B^+$) im empfangenen Signal (SMR) erfaßt werden kann, um die Störsignale von den Informationen zu unterscheiden, die in dem Signal enthalten sein können und die sich auf einen möglichen Defekt in der geschützten Anlage beziehen, dadurch gekennzeichnet, daß diese Operation im wesentlichen darin besteht, im Frequenzspektrum des empfangenen modulierten Signals (SMR) das Auftreten von komponenten zu erfassen, deren Frequenz niedriger als die Mindestfrequenz ($F_m$) des gesendeten modulierten Signals (SME) ist, wobei das Auftreten derartiger Frequenzen als Vorhandensein von Übertragungsstörsignalen ($B^-$, $B^+$) interpretiert wird.

2. Verfahren nach Anspruch 1, dadurch gekennzeichnet, daß der Erfassungsoperation eine Formgebungsoperation des empfangenen modulierten Signals (SMR) vorausgeht, die zu einer Begrenzung der Amplitudenschwankungen dieses Signals auf schnelle Übergänge (TF) zwischen zwei von Null gleich weit entfernt liegenden Pegeln ($N^+$, $N^-$) führt.

3. Verfahren nach Anspruch 1 oder Anspruch 2, dadurch gekennzeichnet, daß die Erfassungsoperation in einer Tiefpaßfilterung des empfangenen modulierten Signals besteht, die mit einer Grenzfrequenz ($F_c$) erfolgt, welche höchstens halb so groß wie die Mindestfrequenz des gesendeten modulierten Signals ist.

4. Einrichtung zur Überwachung eines von einem Sender (E) an einen Empfänger (R) übertragenen Signals in einem Differentialsystem zum Schutz einer elektrischen Anlage, wobei das übertragene Signal die Form eines aus einer Frequenz- oder Periodenmodulation einer Trägerwelle ($F_o$) hervorgegangenen modulierten Signals (SME) besitzt und die Trägerwelle mit einem Signal (S) moduliert wurde, das die zu übertragende relevante Information darstellt, und wobei die Einrichtung einen Detektor (7, 8, 9) aufweist, der die das empfangene Signal (SMR) beeinträchtigenden Übertragungsstörsignale ($B^-$, $B^+$) nachweist, dadurch gekennzeichnet, daß die Einrichtung ein Tiefpaß- oder ein Bandpaßfilter (7) aufweist, welche das empfangene modulierte Signal (SMR) empfängt und eine obere Grenzfrequenz ($F_c$) besitzt, die niedriger als die Mindestfrequenz des gesendeten modulierten Signals (SME) ist.

5. Einrichtung nach Anspruch 4, dadurch gekennzeichnet, daß sie eine Formgebungsschaltung (5) aufweist, welche das empfangene modulierte Signal direkt empfängt und an das Tiefpaßoder Bandpaßfilter ein moduliertes Signal liefert, das nur zwei Pegel mit schnellen Übergängen aufweist.

6. Einrichtung nach Anspruch 4 oder 5, dadurch gekennzeichnet, daß das Filter (7) ein Butterworthfilter ist.

7. Einrichtung nach einem der Ansprüche 4 bis 6, dadurch gekennzeichnet, daß sie einen an den Ausgang des Filters angeschlossenen Komparator (8a) aufweist, der ein Bezugssignal ($V_1$) empfängt und ein Signal (8s, 8t) liefert, das Übertragungsstörsignale anzeigt, wenn die Amplitude des Ausgangssignals des Filters (7) dem Absolutwert nach größer als das Bezugssignal ($V_1$) ist.

## Claims

1. A method for monitoring a signal transmitted by a transmitter (E) to a receiver (R) in a differential protection system for an electrical installation, said transmitted signal taking the form of a modulated signal (SME) resulting from frequency or period modulation of a carrier wave ($F_o$) by a signal (S) representing the significant information to be transmitted, the method comprising a detection step adapted to identify the presence of transmission noise (B⁻, B⁺) in the received signal (SMR), in order to distinguish such noise from information, which may be carried by this signal and relating to a possible fault in the protected installation, characterized in that said step consists essentially in detecting in the frequency spectrum of the modulated received signal (SMR) the presence of components whose frequency is below the lowest frequency ($F_m$) of the modulated transmitted signal (SME), the presence of such frequencies being attributed to the presence of transmission noise (B⁻, B⁺).

2. A method according to claim 1, characterized in that said detection operation is preceded by a step of shaping the modulated received signal (SMR) in order to limit the amplitude variations of this signal to rapid transitions (TF) between two levels (N⁺, N⁻) equidistant to zero.

3. A method according to any one of claims 1 and 2, characterized in that the detection step comprises low-pass filtering of the modulated received signal, with a cut-off frequency ($F_c$) below half the lowest frequency of the modulated transmitted signal.

4. A device for monitoring a signal transmitted from a transmitter (E) to a receiver (R) in a differential protection system for an electrical installation, this transmitted signal taking the form of a modulated signal (SME) resulting from frequency or period modulation of a carrier wave ($F_o$), by a signal (S) representing the significant information to be transmitted, the device including a detector (7, 8, 9) adapted to identify the transmission noise (B⁻, B⁺) affecting the received signal (SMR), characterized in that said detector includes a low-pass filter or a band-pass filter (7) receiving the modulated received signal (SMR) and having an upper cut-off frequency ($F_c$) less than the minimum frequency of the modulated transmitted signal (SME).

5. A device according to claim 4, characterized in that it comprises a shaping circuit (5) directly receiving the modulated received signal and providing to the low-pass or bandpass filter a signal modulated on two levels with fast transitions.

6. A device according to claim 4 or 5, characterized in that the filter (7) is a Butterworth filter.

7. A device according to any one of claims 4 to 6, characterized in that it comprises a comparator (8a) connected to the filter output and receiving a reference signal ($V_1$) and providing a signal (8s, 8t) indicative of transmission noise when the amplitude of the output signal of the filter (7) is, in absolute value, greater than the reference signal ($V_1$).

FIG.1

FIG.2

EP 0 210 093 B1

8

FIG. 3

a)

b)

FIG. 4